# EUROPEAN PATENT APPLICATION

(11) **EP 2 698 124 A1**
(43) Date of publication of application: **19.02.2014**
(21) Application number: 13175361.8
(22) Date of filing: 05.07.2013
(51) Int. Cl.: A61C 5/06, A61C 9/00

(54) **Universal impression material, delivery device and system**

(30) Priority: 15.08.2012 US 201261683466 P; 15.03.2013 US 201313839170
(71) Applicant: Kerr Corporation, Orange, CA 92867 (US)
(72) Inventor: Durali, Mehdi, Carlsbad, CA California 92009-2043 (US); Krikorian, Vahik, La Canada, CA California 92011-1813 (US)
(74) Representative: Findlay, Alice Rosemary

(57) **Abstract**

A universal dental impression material system uses a programmable device (10) having containers for separately housing two or more components that form a dental impression material when mixed. A mixing chamber (20) and a dispensing means respectively receive/mix the components and dispense the dental impression material. One or more viscosity modification zones (30) are configured to apply viscosity manipulation to a component prior to mixing, to the components in the mixing chamber (20) during mixing, and/or to the dental impression material in the dispensing means after mixing. A user interface accepts user input of desired properties, such as viscosity, color, work/set time and/or extrusion rate. A controller operatively coupled to the user interface is configured to control dispensing of the components to the mixing chamber (20), activation as needed of the viscosity modification zones (30), and dispensing from the dispensing means in response to the user input to achieve the desired properties.

## Description

This invention relates to an impression material and a dispensing device and system in the dental field.

The use of elastomeric materials for obtaining dental impressions is well known in the art. Dental impressions are useful for providing detail of a patient's dental anatomy, for example, for the creation of inlays, onlays, crowns and bridges, as well as removable prosthetic devices. Typically, the materials used to obtain dental impressions comprise two components, a base paste and a catalyst paste, which are dispensed from separate containers prior to use, mixed together, and applied either directly inside the oral cavity or into an impression tray.

Conventionally, the formulation of the base paste and the catalyst paste define the desired work/set time, viscosity, color and other physico-chemical characteristics of the final impression material once they are mixed, typically in a 1:1 ratio. Current impression materials come in a variety of configurations based on their viscosity, color, and work/set time with different mechanical properties. The viscosities range from light body (wash), medium body, heavy body, and putty and work/set times range from regular, fast and super-fast set. Currently a general dentist stocks a variety of different impression materials with different viscosities, color and work/set time in order to perform the impression taking task in his/her day-to-day practice. This may amount to over 10-20 products from a single manufacturer. This creates a number of issues including but not limited to inventory management and procedural errors for the dental office.

There is no impression material currently in the market that can alter the viscosity, work time and set time at will. There is thus a need for a dental impression system which enables adjustable physico-chemical properties within a clinically relevant range, including control of viscosity, color, work time, set time, and extrusion rate.

In accordance with an embodiment of the invention, a universal dental impression material system comprises a programmable device, which has two or more cartridge containers for separately housing two or more components that form a dental impression material when mixed. A mixing chamber is coupled to the cartridge containers for receiving and mixing the components, and a dispensing means is downstream of the mixing chamber for dispensing the dental impression material from the programmable device. One or more viscosity modification zones are included, each configured to be activated to apply viscosity manipulation to a component prior to mixing, to the components in the mixing chamber during mixing, or to the dental impression material in the dispensing means after mixing, or to a combination thereof. A user interface is included for accepting user input of at least one desired property selected from a desired viscosity, a desired color, a desired work/set time, a desired extrusion rate, or any combination thereof. A controller is operatively coupled to the user interface, and is configured to control dispensing of the components to the mixing chamber, activation of the one or more viscosity modification zones, and dispensing from the dispensing means in response to the user input to achieve the at least one desired property.

In one embodiment, the system further comprises two or more cartridges for placing in the cartridge containers, each containing one of the two or more components including at least a base component and a catalyst component. The dental impression material exhibits different properties depending on the mixing ratio of the base component to the catalyst component and/or the amount of applied viscosity manipulation.

The present invention also provides a method of dispensing a dental impression material using a programmable device. At least two cartridges are inserted in separate cartridge containers in a programmable device, where the at least two cartridges include, respectively, a base component and a catalyst component. The programmable device comprises a mixing chamber coupled to each of the separate cartridge containers, dispensing means downstream of the mixing chamber for dispensing the dental impression material, and one or more viscosity modification zones configured to be activated to apply viscosity manipulation to the base component or the catalyst component prior to mixing, to the base and catalyst components in the mixing chamber during mixing, or to the dental impression material in the dispensing means after mixing, or to a combination thereof. The programmable device also comprises a user interface for accepting user input of at least one desired property; and a controller operatively coupled to the user interface, wherein the user interface is programmed to calculate a mixing ratio of the base component to the catalyst component and/or the amount of applied viscosity manipulation needed to achieve the at least one desired property and to instruct the controller to implement the calculation. The method further comprises inputting the at least one desired property into the user interface, wherein the at least one desired property is selected from a desired viscosity, a desired color, a desired work/set time, a desired extrusion rate, or any combination thereof. The controller implements the dispensing of the components from the cartridges to the mixing chamber, activates the one or more viscosity modification zones as needed, and dispenses the dental impression material from the dispensing means in accordance with the calculation and instruction from the user interface.

The invention will now be further described by way of example with reference to the accompanying drawings, in which:

FIG. 1 is a graphical depiction of representative shearthinning and subsequent thixotropic behavior exhibited by select dental impression materials.

FIG. 2 is a schematic depiction of an embodiment of the device of the invention having three components A, B, and C separately fed to a mixing chamber.

FIGS. 3-6 are schematic depictions of embodiments of the device of FIG. 2 having one or more Viscosity Modification Zones (VMZs).

This disclosure relates to an impression material and a handheld or bench top device that dispenses the material with different properties, including but not limited to viscosities, work/set time, extrusion rates and/or color. A universal material is used that includes two or more components including a base component and a catalyst component, which can be mixed at different ratios to produce different properties, and/or that can be manipulated to produce different properties. By way of example, the universal material can be vinyl polysiloxane-based or any other two component impression material chemistry. The dispensing device is programmable with a user interface that accepts user input to dispense the universal material having the desired properties consistent with the user input.

As used herein, component refers to a single ingredient or a mixture of ingredients, where each component is kept separate until just prior to use. Components may include a base component and a catalyst component, at a minimum, but may also include a dye component, a diluent component, an initiator component, etc. The base and catalyst components are typically in paste form, and may also be referred to as base paste and catalyst paste, although the invention is not limited to paste components. Just prior to use, the components are mixed together to form the dental impression material.

As used herein, work time (working time) is generally understood to refer to the period of time beginning with the commencement of mixing and ending before the material being mixed has begun to exhibit elastic properties that will prevent the material from being manipulated as required to form an impression or a mold having the desired surface detail and dimensional characteristics, as set forth in ISO 4823-2000.

As used herein, set time is generally understood to refer to the time it takes from the commencement of mixing to when the material is fully cured and ready to be removed from the oral cavity.

As used herein, viscosity is generally understood to refer to the ability of the material to flow; the thicker the material, the less it flows, and therefore the more viscous it is said to be.

In one embodiment, the base paste and catalyst paste are mixed at a predetermined dispensing rate based on the user input to change the ratios between components in such a way to accommodate a given work/set time. The user can select a predetermined work/set time or enter a required time value within a given range and the programmable device calculates the required ratios for mixing the material components by interpolation/extrapolation.

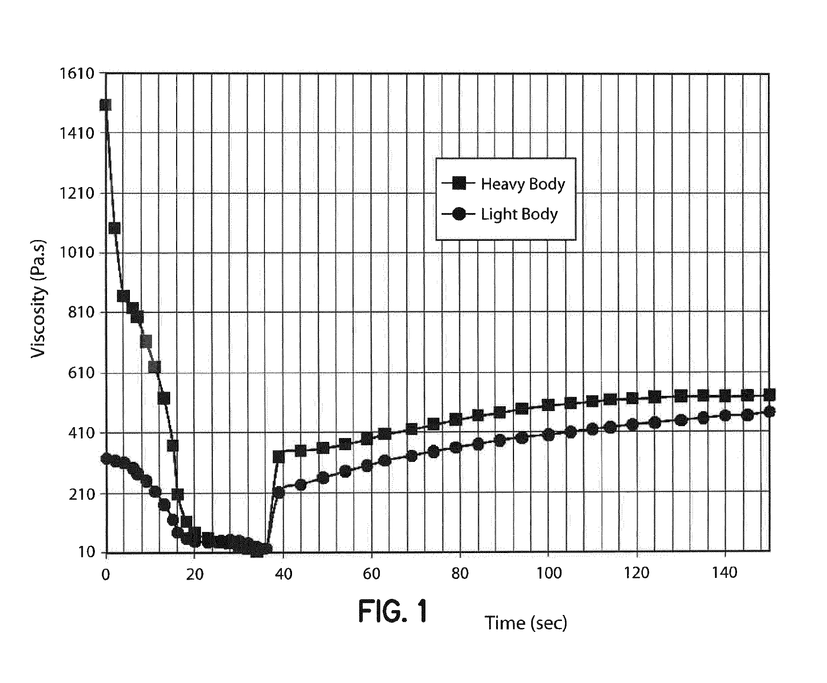

According to an embodiment, a composition of the base paste and/or the catalyst paste component is configured such that the material exhibits a shear thinning or shear thickening behavior, such that before or after mixing an external force/vibration can be applied to one or more of the components within a "Viscosity Modification Zone" (VMZ), described further below, to bring the viscosity close or equal to a user defined value. As shown in FIG. 1, upon application of an external force, the viscosity can be reduced, thus allowing a single material to be provided with any of several user-requested viscosities.

According to an embodiment, the viscosity of the components within the VMZ can be manipulated or changed through application of electromagnetic waves (light, etc.) and/or heat, etc. According to another embodiment, the device is configured to impart sonic vibrations to alter the viscosity of the material. For example, the device may leverage a mechanical vibration source with a programmable handpiece that applies shear stress to the material. According to another embodiment, the device is activated through electromagnetic linear and rotary motors or through a manual mechanical means.

According to an embodiment, the two or more components, typically packaged in individual or bundled cartridges, are positioned in two or more separate cartridge containers in the device such that their dispensing rates and ratios can be selectively varied by the operator or the pre-programmed microprocessor or equivalent mechanism. For example, the components in each container can be dyes for color, base paste, catalyst paste, etc.

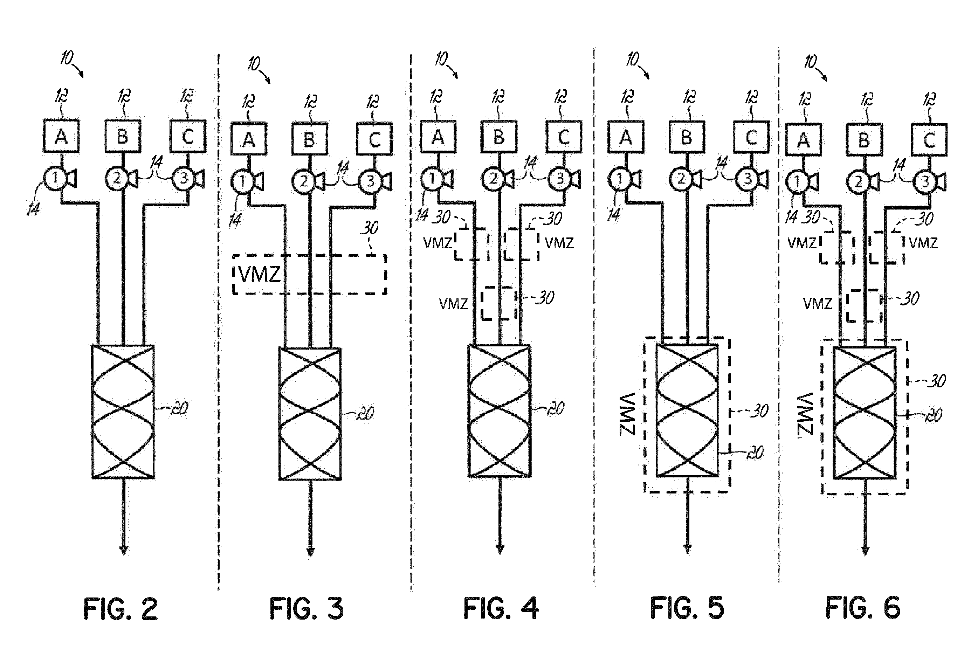

This invention includes a system that delivers an impression material at a clinically relevant user defined work/set time and/or at different viscosities spanning over the viscosities currently used as heavy, medium, and light body. FIGS. 2-6 depict several nonlimiting embodiments of devices for delivering the impression material in accordance with the invention. Like reference numerals are used throughout to refer to like parts.

In one embodiment, depicted schematically in FIG. 2, the device 10 is a programmable handle-held device configured to accommodate two or more cartridges 12, each containing a component (A, B, C) of the universal material, and each controllably coupled to a mixing chamber 20, such as via a metering valve 14 and conduit (shown as the line connecting the valve 14 and mixing chamber 20), for mixing the components at different ratios just prior to dispensing from a dispensing means, such as a nozzle, needle or other tip (not shown),of the device 10. The dispensing means is positioned downstream of the mixing chamber 20. Valves 14 may be coupled to a controller (not shown) for controlling the rate at which the component is delivered to the mixing chamber 20. For example, the #1 valve may be instructed to dispense component A at 1.5 times the rate that the #2 valve dispenses component B to mix A:B at a 1.5:1 ratio, where A and B have substantially the same viscosities. The valves 14 may also be controlled to deliver quantity without regard to dispensing rate to obtain certain ratios of components. For example, the #1 valve may be instructed to deliver x mg. of component A and y mg. of component B to obtain a x:y weight ratio of A:B, plus z ounces of component C (e.g., dye).

In another embodiment, depicted schematically in FIG. 3, the components are subject to a VMZ 30 before mixing in the mixing chamber 20. As shown, each component A, B, C passes through the same VMZ 30. In another embodiment, depicted schematically in FIG. 4, multiple VMZs 30 could be employed within the device 10 prior to the mixing in the mixing chamber 20. As shown, each of the components A, B, C has its own VMZ 30 positioned on the conduit between the valve 14 and mixing chamber 20, such that each component can be selectively subjected to viscosity manipulation, such as by applying an external force or heat. In another embodiment, depicted schematically in FIG. 5, viscosity modification and mixing are conducted at the same area, i.e., the mixing chamber 20 is the VMZ 30. In another embodiment, depicted schematically in FIG. 6, in addition to the individual VMZs 30 prior to mixing, an additional VMZ 30 concurrent with or after mixing is utilized. While each component A, B, C in FIGS. 4 and 6 is shown to pass through a VMZ 30 prior to mixing, it may be appreciated that fewer than all components may be subjected to a VMZ 30. Either a particular VMZ 30 may not be provided in the device 10, or a VMZ 30 may be present but not activated, depending on the user input. It may also be appreciated that a VMZ 30 may be positioned after the mixing chamber 20, for example, at the dispensing means or between the mixing chamber 20 and the dispensing means. In an exemplary embodiment, viscosity manipulation occurs before or concurrently with mixing of the components.

The dispensing means and each VMZ 30 may be controllably coupled to the controller (not shown) that is likewise coupled to the valves 14, such that the controller is configured to control the dispensing of the components to the mixing chamber 20, the activation of the VMZs 30, and the dispensing from the dispensing means. The device 10 further includes a user interface (not shown), which includes hardware and software. The user interface is configured to accept user inputs related to at least one desired property of the dental impression material. The desired properties may be viscosity, color, work/set time, extrusion rate, and any combination thereof. The inputted desired properties are used by the programmable device 10 to calculate the mixing ratios of the components and the viscosity manipulation needed to achieve the desired properties. The controller then operates the valves 14 and activates the VMZs 30, as appropriate, to mix, manipulate and dispense the dental impression material from the dispensing means with the desired properties.

The device may be programmed to accept certain user inputs, for example, work/set time values or ranges, viscosity values or ranges, and/or color options. The inputs may be pre-defined or numerical selections. For example, a user may be able to select from "regular," "fast," or "super-fast" work/set time category options, or may be able to enter numerical values. Likewise, a user may be able to select from "heavy body," "medium body," or "light body" viscosity category options, or may be able to enter a numerical value, such as 200 Pa·sor 800 Pa·s. Based on these inputs, the system is programmed to calculate the mixing ratios of the components from the cartridges and the viscosity manipulation to be applied to alter the material to achieve the inputted properties.

In another embodiment, the dispensing flow rate or extrusion rate can be altered in order to achieve a user's preference. In the case of a motor driven system, for example, this may provide enhanced ergonomics.

By virtue of the material, device and/or system of the invention, a single universal material may be stocked by a dental practitioner, in the form of multiple components to be mixed, advantageously as single or bundled cartridges for insertion into the dispensing device, which material can be dispensed to user-inputted specifications via the programmable nature of the device and the system for relating the inputs to output parameters for achieving the desired outcome.

### EXAMPLES

Example 1: Feasibility of adjusting work/set time on demand was evaluated by blending different ratios of base and catalyst pastes of an impression material. Table 1 summarizes two experiments where different proportions of base and catalyst pastes were mixed to achieve work/set times corresponding to fast set and super-fast set curing speeds.

**TABLE 1: An example of work/set time adjustment through Catalyst/Base Ratio**

| | Example 1 | Example 2 |
|---|---|---|
| Ratio of Base:Catalyst | 2:1 | 1:2 |
| Work Time (min:sec) | 1:00 | 1:30 |
| Set Time (min:sec) | 2:00 | 2:40 |

As shown, with a 1:2 Base:Catalyst ratio, a fast work/set time is achieved. By altering the delivery of the same Base and Catalyst paste components to obtain a 2:1 Base:Catalyst ratio, the same impression material components give a super-fast work/set time.

Example 2: Rheological profile of impression materials:

Shear thinning and thixotropic behavior of two impression materials (light body and heavy body) upon application of an external stress was studied in Example 2. A stress Rheometer was used for the test. The two materials were exposed to increasing stress levels up to a maximum (evident by dropping viscosity) followed by switching to a constant lower stress and following material behavior as a function of time. In both experiments, nonreactive base paste was used. The results are graphically shown in FIG. 1.

The study showed it was possible to drop heavy body paste viscosity close to that of a light body material once proper external stress was applied to the material. Furthermore, this work demonstrated that upon switching to lower stress, the heavy body paste followed the light body viscosity profile. This study further proved it was possible to achieve variable viscosities from a single impression paste once an appropriate stress is applied to the material.

In operation, a method of dispensing the universal dental impression material includes inserting the separate cartridges into the programmable device, including at least cartridges containing a base component and a catalyst component. Using an interface on the programmable device, the user then inputs at least one desired property selected from viscosity, color, work/set time, extrusion rate, or any combination thereof. The controller will then implement the dispensing of components to the mixing chamber, activation of the VMZs as needed, and dispensing of the material from the device in accordance with calculations and instructions from the user interface.

While the present invention has been illustrated by the description of one or more embodiments thereof, and while the embodiments have been described in considerable detail, additional advantages and modifications will readily appear to those skilled in the art.

## Claims

1. A universal dental impression material system, comprising:
a programmable device comprising:
two or more cartridge containers for separately housing two or more components that form a dental impression material when mixed;
a mixing chamber coupled to the two or more cartridge containers for receiving and mixing the two or more components;
dispensing means downstream of the mixing chamber for dispensing the dental impression material from the programmable device;
one or more viscosity modification zones, each configured to be activated to apply viscosity manipulation to a component of the two or more components prior to mixing, to the two or more components in the mixing chamber during mixing, or to the dental impression material in the dispensing means after mixing, or to a combination thereof;
a user interface for accepting user input of at least one desired property selected from a desired viscosity, a desired color, a desired work/set time, a desired extrusion rate, or any combination thereof;
a controller operatively coupled to the user interface, the controller being configured to control dispensing of the two or more components to the mixing chamber, activation of the one or more viscosity modification zones, and dispensing from the dispensing means in response to the user input to achieve the at least one desired property.

2. The system of claim 1, wherein the user interface is programmed to accept pre-defined category inputs for the desired work/set time.

3. The system of either claim 1 or claim 2, wherein the user interface is programmed to accept numerical value or range inputs for the desired work time and desired set time.

4. The system of any preceding claim, wherein the user interface is programmed to accept pre-defined category inputs for the desired viscosity.

5. The system of any preceding claim, wherein the user interface is programmed to accept numerical value or range inputs for the desired viscosity.

6. The system of any preceding claim, wherein the mixing chamber is coupled to each of the two or more cartridge containers via a metering valve and conduit, wherein the metering valves are operably coupled to the controller for metering the two or more components at a rate or quantity calculated to achieve the at least one desired property.

7. The system of claim 6, wherein the one or more viscosity modification zones include at least one viscosity modification zone associated with the conduit of at least one of the two or more components.

8. The system of claim 7, wherein the one or more viscosity modification zones include a viscosity modification zone associated with the mixing chamber.

9. The system of any preceding claim, wherein the one or more viscosity modification zones include a viscosity modification zone associated with the mixing chamber.

10. The system of any preceding claim, further comprising:
two or more cartridges for placing in the cartridge containers, each containing one of the two or more components including at least a base component and a catalyst component, wherein the dental impression material exhibits different properties depending on the mixing ratio of the base component to the catalyst component and/or the amount of applied viscosity manipulation.

11. The system of claim 10, wherein at least one of the base component or catalyst component exhibits a shear thinning or shear thickening behavior in response to an external force or vibration, and wherein the one or more viscosity modification zones are configured to apply the external force or vibration as the viscosity manipulation to the at least one of the base component or catalyst component to alter the viscosity of the dental impression material to match the desired viscosity.

12. The system of either claim 10 or claim 11, wherein the two or more cartridges include a first plurality of cartridges containing an identical base component and a second plurality of cartridges containing an identical catalyst component, whereby the each combination of a cartridge of the first plurality with a cartridge of the second plurality is identical, yet the dental impression material dispensed from the dispensing means is capable of having different properties in accordance with the user input.

13. The system of any one of claims 10 to 12, wherein the two or more cartridges include a color cartridge containing a dye component for dispensing a calculated quantity of dye to achieve the desired color in accordance with the user input.

14. A method of dispensing a dental impression material, comprising:
inserting at least two cartridges in separate cartridge containers in a programmable device, wherein the at least two cartridges include, respectively, a base component and a catalyst component, and wherein the programmable device comprises: a mixing chamber coupled to each of the separate cartridge containers; dispensing means downstream of the mixing chamber for dispensing the dental impression material; one or more viscosity modification zones configured to be activated to apply viscosity manipulation to the base component or the catalyst component prior to mixing, to the base and catalyst components in the mixing chamber during mixing, or to the dental impression material in the dispensing means after mixing, or to a combination thereof; a user interface for accepting user input of at least one desired property; and a controller operatively coupled to the user interface, wherein the user interface is programmed to calculate a mixing ratio of the base component to the catalyst component and/or the amount of applied viscosity manipulation needed to achieve the at least one desired property and to instruct the controller to implement the calculation;
inputting the at least one desired property into the user interface, wherein the at least one desired property is selected from a desired viscosity, a desired color, a desired work/set time, a desired extrusion rate, or any combination thereof,
wherein the controller implements the dispensing of the components from the cartridges to the mixing chamber, activates the one or more viscosity modification zones as needed, and dispenses the dental impression material from the dispensing means in accordance with the calculation and instruction from the user interface.

15. The method of claim 14, wherein the at least two cartridges include a color cartridge containing a dye component for dispensing a calculated quantity of dye in response to inputting the desired color as the at least one desired property.
